(19) Europäisches Patentamt
European Patent Office
Office européen des brevets

(11) **EP 3 472 250 B1**

(12) **EUROPEAN PATENT SPECIFICATION**

(45) Date of publication and mention
of the grant of the patent:
**23.03.2022 Bulletin 2022/12**

(21) Application number: **16905077.0**

(22) Date of filing: **17.06.2016**

(51) International Patent Classification (IPC):
**C09D 133/08** $^{(2006.01)}$    **C09D 191/06** $^{(2006.01)}$
**C09K 109/00** $^{(2006.01)}$

(52) Cooperative Patent Classification (CPC):
(C-Sets available)
**C09D 133/08;** C09D 191/06          (Cont.)

(86) International application number:
**PCT/CN2016/086133**

(87) International publication number:
**WO 2017/214962 (21.12.2017 Gazette 2017/51)**

(54) **COATING COMPOSITION WITH IMPROVED LIQUID STAIN REPELLENCY**

BESCHICHTUNGSZUSAMMENSETZUNG MIT VERBESSERTER
FLÜSSIGKEITSFLECKENABWEISUNG

COMPOSITION DE REVÊTEMENT PRÉSENTANT UN CARACTÈRE RÉPULSIF AMÉLIORÉ
VIS-À-VIS DES TACHES DUES AUX LIQUIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2019 Bulletin 2019/17**

(73) Proprietors:
• **Dow Global Technologies, LLC**
**Midland, MI 48674 (US)**
• **Rohm and Haas Company**
**Collegeville, PA 19426 (US)**

(72) Inventors:
• **QIAN, Zhen**
**Shanghai 201203 (CN)**
• **CUI, Wei**
**Shanghai 201203 (CN)**
• **XU, Jianming**
**Shanghai 201203 (CN)**
• **ZHANG, Qingwei**
**Shanghai 201203 (CN)**
• **LI, Ling**
**Shanghai 201203 (CN)**

(74) Representative: **Houghton, Mark Phillip**
**Patent Outsourcing Limited**
**Cornerhouse**
**1 King Street**
**Bakewell**
**Derbyshire DE45 1DZ (GB)**

(56) References cited:
**EP-A2- 0 252 526          EP-A2- 2 077 301
WO-A1-98/08894          CN-A- 103 555 114
CN-A- 104 017 146          CN-A- 104 449 282
CN-A- 105 254 800          CN-A- 105 367 698
GB-A- 1 197 925          JP-B2- 4 507 043
US-A- 3 494 878          US-A- 4 139 514
US-A- 4 423 031          US-A- 4 894 397**

(52) Cooperative Patent Classification (CPC): (Cont.)

C-Sets
**C09D 133/08, C08K 2003/2241, C08K 5/01,
C08K 2003/2203;**
C08F 220/18, C08F 212/08, C08F 220/1808,
C08F 220/06, C08F 212/30, C08F 220/40;
C08F 220/18, C08F 220/06, C08F 212/14,
C08F 220/40, C08F 212/08

C-Sets

**Description**

FIELD OF THE INVENTION

The present invention relates to a coating composition with improved liquid stain repellency.

INTRODUCTION

Stain repellency, especially liquid stain repellency, is one of the key performance requirements for coating compositions. Stain repellency is a coated surface's resistance to stains, including its resistance to being wetted by liquid stains, its resistance to being adhered by stains on the coating surface, and how easily liquid stains can be removed. In the coating industry, one of the commonly used and highly effective additives to repel liquid stains is wax. Wax tends to migrate to the surface of dry coating films and reduces the surface tension, thereby improving stain repellency.

On the other hand, in order to minimize the amount of volatile organic compounds (VOCs) in architectural coatings, in most architectural coating compositions today, alkyl acrylic monomers, such as ethyl acrylates (EAs) and ethylhexyl acrylates (EHAs), are used to make the binder component in the coating composition. However, one of the problems of using alkyl acrylic monomers (such as EAs and EHAs) in coating compositions is that their hydrophilic properties actually reduces the stain repellency effects of wax. Consequently, to compensate for the poor liquid stain repellency effect caused by acrylic monomers, more wax need to be added into the coating composition. Doing so would result in additional costs and increases the overall weight of resultant coating composition.

WO98/08894A1 discloses a neutralised coating composition containing a fixed base, in which the fixed base comprises at least 5 % weight/weight lithium base, with the proviso that the neutralised coating composition does not include a zinc silicate paint composition. EP2077301A1 discloses a waterborne coating composition comprising a vinyl copolymer with an optimized level of phosphorus-containing functional groups in conjunction with at least 20% by weight of the copolymer, of ethyl acrylate, methyl acrylate or combinations thereof and one or more opacifying colorants, preferably titanium dioxide. US4423031A discloses liquid or paste eye makeup preparations containing, as a film forming agent, an aqueous emulsion of at least one copolymer of one or more alkyl acrylates having from C4 to C18 alkyl groups in the ester portion and one or more alkyl methacrylates having from C1 to C4 alkyl groups in the ester portion. US3494878 discloses an ion exchange resin of anionic or cationic types or a mixture thereof is incorporated in aqueous coating compositions the binder of which comprises as an essential component thereof a dispersed emulsion polymer of vinyl addition type. GB1197925 discloses a substrate is coated with a pigmented primer layer containing an acrylic polymer composed of (a) from 40 to 80% of an ester of acrylic acid with a C1-C 18 primary alkanol, (b) from 18 to 59.5% of at least one C1-C 6 alkyl methacrylate, and (c) from 0.5 to 2.0% of one or more alpha, beta-unsaturated carboxylic acids, and a clear top layer containing a fluorinated copolymer composed of 60 to 95% vinylidene fluoride and 40 to 5% of tetrafluoroethylene or perfluoropropene. CN104017146 discloses a water-based acrylate adhesive for reflective coatings and a preparation method thereof. The water-based acrylate adhesive comprises the raw materials in parts by weight: 8-10 parts of perfluoroalkyl phosphate amine salt, 0.5-1.5 parts of heterogeneous tridecyl alcohol polyoxyethylene (40) ether, 6-7 parts of diacetone acrylamide, 3-4 parts of adipic dihydrazide, 1-2 parts of vinyl-containing functional silicon oil, 145-155 parts of ethyl acrylate, 30-40 part of methyl methacrylate, 2-4 parts of acrylic acid, 1-1.4 parts of ammonium persulfate and 280 parts of deionized water. US4139514 discloses aqueous, translucent to clear, water-borne vehicles of emulsion polymerized mixture of acrylic acid or methacrylic acid, an acrylate ester and, optionally, a styrene compound. Blends thereof with latexes and clear and pigmented compositions thereof. JP4507043 discloses a stain-proof coating composition which has an excellent stain-proof property and excellent application workability resistant to blocking, floatation, peeling, joint opening and is useful for wallpaper.

Thus, there is a need to develop an architectural coating composition that, when a binder is prepared by using alkyl acrylic monomers, such coating composition can achieve a performance balance in stain repellency and VOC, without having to increase the amount of wax content.

SUMMARY OF THE INVENTION

The invention is set out in accordance with the appended claims. The present invention provides a coating composition comprising, by dry weight based on total dry weight of the coating composition, i) from 20 wt.% to 45 wt.% of an emulsion copolymer being a copolymerization product of a monomer mixture comprising, based on the total dry weight of the emulsion copolymer, from 30 wt.% to 80 wt.%, of ethyl acrylate; from 20 wt.% to 70 wt.%, of styrene; and from 1 wt.% to 4 wt.%, of an ethylenically unsaturated carboxylic acid containing monomer; ii) from 0.5% to 5% of a paraffin wax; iii) from 30% to 55% of a pigment; and iv) from 0.003% to 0.5% of lithium hydroxide.

DETAILED DESCRIPTION OF THE INVENTION

**Emulsion Copolymer**

The emulsion copolymer in accordance to one embodiment of the present invention comprises a combination of soft and hard monomers.

In one embodiment, the soft monomer is a $C_2$ to $C_8$ alkyl (meth)acrylate monomer and may include, for example, ethyl acrylate (EA), 2-ethylhexyl acrylate (2-EHA), n-butyl acrylate (BA), iso-butyl acrylate, octyl methacrylate, isooctyl methacrylate, decyl methacrylate (n-DMA), isodecyl methacrylate (IDMA), allylmethacrylate (ALMA), lauryl methacrylate (LMA), pentadecyl methacrylate, stearyl methacrylate (SMA), octyl acrylate, isooctyl acrylate, decyl acrylate, isodecyl acrylate, lauryl acrylate (LA), $C_{12}$ to $C_{15}$ alkyl methacrylates, cyclohexylacrylate, and cyclohexylmethacrylate. In some embodiments of the present invention, the soft monomer is a mixture of two or more soft monomers, such as, for example, a mixture of EA and EHA.

To improve stability in aqueous emulsion copolymer systems, it is desirable to include into the emulsion copolymer of the present invention a small amount of ethylenically unsaturated carboxylic acid group containing monomers, such as, for example, maleic acid or anhydride, itaconic acid or, preferably in some embodiments of the present invention, methacrylic acid (MAA) and acrylic acid (AA). Preferably, the ethylenically unsaturated carboxylic acid group containing monomer is added in a polymer seed or in an initial charge to a polymerization reactor, thereby limiting any adverse impact on water swelling resistance.

Suitable ethylenically unsaturated sulfur containing acid functional monomers can also be added to the emulsion copolymers and may include, for example, sodium styrene sulfonate (SSS) and (meth)acrylamidopropane sulfonate. Examples of suitable phosphorus acid monomers may include, for example, phosphoalkyl (meth)acrylates such as phosphoethyl methacrylate. The ethylenically unsaturated acids may be used in amounts of up to 1.2 wt.%, or, preferably, from 0.03 to 0.8 wt.%, based on the total dry weight of emulsion copolymer mixture, and include monomers with sulfur and phosphorus acid functional groups.

The neutralizer being used in the present invention is lithium hydroxide (LiOH). Suitable LiOH solutions can be obtained from, for example, the Chinese Chemical Reagent Co,, Ltd. The amount of LiOH required to add to the emulsion during the polymerization process varies so long as the final pH level of emulsion copolymer is between 7.5 and 8.5. In one embodiment of the present invention, the amount of LiOH neutralizer is between 0.05 to 0.5 wt.%, based on the total dry weight of the emulsion copolymer mixture.

To reduce the gel content in the emulsion copolymer of the present invention (preferably keeping the gel content at around from 0.03 to 0.8 wt.%, based on the total dry weight of the emulsion copolymer mixture), one or more sulfur acid monomer, such as SSS, can be added to act as an in-process stabilizer. Such sulfur acid monomer may reduce gel formation during synthesis. Further, the addition of a sulfur acid monomer may further enhance polymerization.

Optionally, the aqueous emulsion copolymer of the present invention comprises one or more adhesion-promoting ethylenically unsaturated monomers. Other such suitable adhesion-promoting ethylenically unsaturated monomers include ureidoalkyl (meth)acrylates, ureidoalkyl (meth)acrylamides and other ureido group containing monomers.

In accordance to one embodiment of the present invention, at least one polymerizable surfactant is added into the monomer mixture of the present invention in amounts of up to 5 wt.%, preferably 0.3 to 3 wt.%, based on the total dry weight of monomer mixture, to act as stabilizing agent. Specifically, in one embodiment of the present invention, a phosphate surfactant, polyethylene glycol monotridecyl ether phosphate, such as RHODAFAC RS-610A25(P-12A) (from Rhodia) is preferably added to the monomer mixture. Other phosphate surfactants, including phosphate monomers such as phosphoethyl methacrylate (PEM), can be optionally added to achieve the same purpose.

Other suitable surfactants may include styrenated phenol sulfates, such as Hitenol™ BC-1025 (from Montello inc., Tulsa, OK), Aerosol™ NPES - 930 (polyoxyethylene) nonylphenol (NP) ammonium sulfate (from Cytec Industries, Woodland Park, NJ), ethoxylated styrenated phenol sulfates, such as E-Sperse™ RS-1596 and E-Sperse™ RS-1618 (from Ethox Chemicals, Greenville, SC), and sodium dodecylallyl sulfosuccinate such as TREM™ LF-40 (from Cognis, Cincinnati, OH).

The emulsion copolymer of the present invention can be prepared by emulsion polymerization techniques well known in the art for making emulsion copolymers from hydrophobic C2 to $C_{24}$ alkyl (meth)acrylate monomers. In one example of a suitable emulsion polymerization method in accordance to the present invention, the monomer mixture is gradually added into the reaction chamber in one continuous step to form an emulsion copolymer. In another example of a suitable emulsion polymerization method in accordance to the present invention, the monomer mixture is added into the reaction chamber in two stages. While not required, the polymerization of the emulsion copolymer of the present invention can be catalyzed by a redox initiation polymerization method; the polymerization also can be polymerized by the conventional thermal initiation polymerization method.

As a result of polymerizing the above-mentioned monomers, as well as incorporating into the emulsion copolymers additives such as the LiOH neutralizer, an emulsion copolymer in accordance to one embodiment of the present invention is formed.

## Paraffin Wax

Coating compositions of the present invention comprises wax. The wax used in the present invention is preferably a paraffin wax, and more preferably a melted refined paraffin wax or its blend with other materials such as polyethylene wax, carnauba wax, or ethylene acrylic acid. The preferred wax has a melt point temperature of 46 to 71°C. In one embodiment of the present invention, the wax is added into the coating composition as a wax emulsion, or in another embodiment, the wax is added by dissolving into the monomers, or added by blending with other coating components.

Suitable examples of the wax include wax emulsions such as MICHEM™ Emulsion 62330 (a blend emulsion of paraffin wax and polyethylene), MICHEM Emulsion 34935 (a blend emulsion of paraffin wax and ethylene acrylic acid), MICHEM Lube 180 (a blend emulsion of paraffin wax and carnauba wax), MICHEM Emulsion 70950, and MICHEM Emulsion 71450 commercially available from Michaelman Inc., and ULTRALUBE™ E-340 commercially available from Keim Additec Surface GmbH.

The wax emulsion can be prepared by melting refined wax to a temperature above its melting point (the elevated temperature). Appropriate emulsifiers such as stearic acid, oleic acid, diethylamine ethanol, 2-amino-2-methyl-1-propanol, are then stirred into the molten wax at the elevated temperature. A base solution, such as potassium hydroxide or ammonium hydroxide, can separately be dissolved in ethylene glycol or water at the elevated temperature and then slowly added to the molten wax with an increasing agitation speed of the mixer. After the water-base mixture has been added to the molten wax, the resulting wax emulsion can be passed through a homogenizer. After homogenization, the resulting wax emulsion is cooled, for example, through a heat exchanger, and then filtered and packaged.

## Pigments and Extenders

Pigments of the present invention are typically inorganic pigment particles, and preferably particulate inorganic materials which are capable of materially contributing to the opacity or hiding capability of a coating. Such materials typically have a refractive index of equal to or greater than 1.8 and include titanium dioxide ($TiO_2$), zinc oxide, zinc sulfide, barium sulfate, and barium carbonate. Titanium dioxide ($TiO_2$) is preferred.

Extenders are typically particulate inorganic materials having a refractive index of less than or equal to 1.8 and greater than 1.3 and include calcium carbonate, clay, calcium sulfate, aluminosilicate, silicate, zeolite, mica, diatomaceous earth, solid or hollow glass, and ceramic bead.

## Other Coating Composition Additives

The coating composition of the present invention may further contain at least one conventional coating additives such as coalescing agents, cosolvents, surfactants, buffers, thickeners, non-thickening rheology modifiers, dispersants, humectants, wetting agents, mildewcides, biocides, plasticizers, antifoaming agents, defoaming agents, anti-skinning agents, colorants, flowing agents, crosslinkers, and anti-oxidants. The uses of these additives are common knowledge in the art.

## Preparation of the Coating Composition

The preparation of the coating composition of the present invention involves the process of selecting and admixing appropriate coating ingredients in the correct proportions to provide a coating with specific processing and handling properties, as well as a final dry coating film with the desired properties.

## Application of the Coating Composition

The coating composition of the present invention may be applied by conventional application methods such as brushing, roller application, and spraying methods such as air-atomized spray, air-assisted spray, airless spray, high volume low pressure spray, and air-assisted airless spray.

Suitable substrates include concrete, cement board, particle board, gypsum board, wood, stone, metal, plastics, wall paper and textile. Preferably, all the substrates are pre-primed by waterborne or solvent borne primers.

## EXAMPLES

The following examples illustrate the advantages of the present invention. Unless otherwise stated, all conditions are standard pressure and room temperature.

Table 1 below lists the key raw materials used for preparation of Examples in accordance with one embodiment of the present invention. Table 1(a) below includes the chemicals used to prepare the emulsion copolymer in accordance to the present invention. Table 1(a) also shows the acronyms for these chemicals, the function for each material, and the commercial supplier from which these materials could be obtained. Table 1(b) below shows the materials used for a coating formulation prepared using the emulsion copolymer of Table 1(a).

*Table 1(a): Key Raw Materials Used to Make the Emulsion Copolymer in Examples*

| Raw material | Function | Supplier |
| --- | --- | --- |
| Polyethylene glycol monotridecyl ether phosphate, RS-610A25 (P-12A) | Surfactant | Stepan Chemical |
| Styrene, ST | Vinyl monomer | Dow Chemical |
| Butyl Acrylate, BA | Soft monomer | Dow Chemical |
| Methacrylic acid, MAA | Functional monomer | Dow Chemical |
| Allylmethacrylate, ALMA | Functional monomer | Dow Chemical |
| 2-Ethylhexyl acrylate, 2-EHA | Soft monomer | Dow Chemical |
| Ethyl acrylate, EA | Hard monomer | Dow Chemical |
| Sodium styrene sulfonate, SSS | Functional monomer | Dow Chemical |
| Lithium Hydroxide, LiOH | Neutralizer | Dow Chemical |
| Epoxy functional silane oligomer, CoatOSil MP 200 | Functional monomer | Momentive |
| Sodium dodecyl (linear) benzene sulfonate, A-19 | Surfactant | Cognis |
| Polyalkylene oxide lauryl methacrylate, QM-833 | Functional monomer | Dow Chemical |
| Michem ® Emulsion | Parafin/Polyethylene Emulsion | Michelman Chemical |

*Table 1(b): Raw Materials Used to Make the Paint Formulation That Was Used in Examples*

| Material: Trade Name (Chemical Name) | Kilogram |
| --- | --- |
| **Grind** | |
| Water | 200.00 |
| Orotan™ 1288 (dispersant in DOW) | 2.50 |
| Triton EF-106 (APEO free surfactant in DOW) | 1.00 |
| AMP-95 (2-amino-2-methyl-1-propanol) | 0.25 |
| Cellusize QP-30000H (thickener in Union Carbide) | 2.00 |
| Dispelair CF-246 (defoamer agent in Blackburn) | 1.00 |
| Rocima 361 | 1.00 |
| Pigment: Ti-Pure R-706™(Titanium dioxide) | 260.00 |
| CC-700 (Calcium carbonate) | 20.00 |
| DB-80 (Kaolin) | 115.00 |
| Wax E-340 (parafin wax emulsion) | |
| **Let Down** | |
| Emulsion: Copolymer A (**Acrylic Latex**) | 320.00 |
| ROPAQUE ™ ULTRA E | 20.00 |
| Foamaster NXZ | 0.50 |

(continued)

| Let Down | |
|---|---:|
| Acrysol RM-2020 NPR | 3.00 |
| Acrysol TT-935 | 1.50 |
| AMP - 95 | 0.83 |
| Kathon LX 1.5% | 1.00 |
| Water | 31.42 |
| COASOL | 19.00 |
| **Total** | 1000.00 |

**Testing procedures**

Liquid stain repellency

Liquid stain repellency evaluates the difficulty of wetting a coating surface with liquid stains. To determine the liquid stain repellency, test coatings were casted on black vinyl charts (The Leneta Co., Form P121-10N Leneta Scrub Test Panels), or on substrates of ceramic, metal, plastic and cementitious panels. The coatings were dried for seven days. The coated substrates were kept vertically so that the liquid stain drops flow from the upper to the bottom side of substrates coated with the test coating materials. Liquid stain repellency was observed and was represented by the liquid stain repellency scores shown in Table 2 below.

*Table 2: Beading Effect Measurement Scale*

| Beading Effect Number | Description |
|:---:|:---:|
| 5 | No wetting nor adhesion of water droplets observed on the coating surface |
| 4 | Wetting observed by individual small circular water droplets observed on the coating surface |
| 3 | Wetting observed by individual large water droplets observed on the coating surface |
| 2 | Wetting observed along the discrete track of water on the coating surface |
| 1 | Wetting observed along the thinner track of water on the coating surface |
| 0 | Wetting observed along the entire track of hydrophilic stains on coating surface |

Stain removal test

Stain removal ability was tested by using GB/T9780-2013. Thin films of test sample are casted on black vinyl scrub charts using a drawdown bar. The test samples are cured for seven days under controlled conditions, before stains are applied. Test area consists of 25mm high and 100 mm wide. Within the test area, six types of stain colors (vinegar, black tea, ink, water black, and alcohol black, Vaseline black) are applied on the sample paint film.
Liquid stains are applied over gauze to prevent the stain material from running off from the test area. Stains stayed on the panel for two hours before excess stain is wiped off with dry tissue. The test panel is then placed on a scrub tester with a 1.5 kg weight, with a scrubbing cycle of 37 scrubs per minute. After the test panel is scrubbed for 200 cycles, it is removed from the tester, rinsed under running water, and hung up for drying.
The cleaned stain area is being evaluated by measuring the change of reflection index (X) using the formula below:

$$X = \frac{Y_1}{Y_0} \times 100$$

$Y_1$ = Reflection index after stain removal test; $Y_2$ = Reflection index before stain removal test.
Based on the reflection index value X, the total stain removal score R was calculated by using the following scoring table:

*Table 3: Stain Removal Scoring Scale*

| R | Vinegar | Black tea | Ink | Water black | Alcohol black | Vaseline black |
|---|---|---|---|---|---|---|
| 10 | 99<X ≤100 | 98<X ≤100 | 96<X ≤100 | 96<X ≤100 | 95 <X ≤100 | 99<X ≤100 |
| 9 | 98<X ≤99 | 95<X ≤98 | 91<X ≤96 | 91 <X ≤96 | 89<X ≤95 | 98<X ≤99 |
| 8 | 97<X ≤98 | 91<X ≤95 | 85<X ≤91 | 85<X ≤91 | 82 <X ≤89 | 97<X ≤98 |
| 7 | 96<X ≤97 | 86<X ≤91 | 78<X ≤85 | 78<X ≤85 | 74<X ≤82 | 96<X ≤97 |
| 6 | 95<X ≤96 | 80<X ≤86 | 70<X ≤78 | 70<X ≤78 | 65 <X ≤74 | 95<X ≤96 |
| 5 | 93<X ≤95 | 73<X <80 | 61<X ≤70 | 61<X ≤70 | 55<X ≤65 | 93<X ≤95 |
| 4 | 90<X ≤93 | 65<X ≤73 | 51<X ≤61 | 51<X ≤61 | 44<X ≤55 | 90<X ≤93 |
| 3 | 86<X ≤90 | 56<X ≤65 | 40<X ≤51 | 40<X ≤51 | 32<X ≤44 | 86<X ≤90 |
| 2 | 81<X ≤86 | 46<X ≤56 | 28<X ≤40 | 28<X ≤40 | 19<X ≤32 | 81<X ≤86 |
| 1 | X ≤81 | X ≤46 | X ≤28 | X ≤28 | X ≤19 | X ≤81 |

Thereafter, the total stain removal score (R') was calculated by using the formula below:

$$R' = \frac{\sum_{i=1}^{n=6} R_i}{n} \times 10.$$

Wherein, Ri are the stain removal scores for different stains. In China, the premium standard of stain removal is 60 points according to the new GB test method. A high stain removal score shows a better stain resistance property.

**Examples**

Polymer dispersion 1 to be used in Inventive Coating Composition 1

326 grams of de-ionized (DI) water was charged into a glass container. Thereafter, 104.4 grams of RS-610A25 (P-12A) surfactant, 587.3 grams of styrene, 105.2 grams of 2-EHA, 760.5 grams of EA, 5 grams of SSS, 30.5 grams of MAA, and 3.8 grams of ALMA, were added into the glass container at room temperature, to form a monomer emulsion mixture.

In a five liter reactor equipped with a mechanical stirrer, thermocouple, condenser, and stainless steel feed ports, 680 grams of DI water was added and heated to 90 degree Celsius in a nitrogen atmosphere. With the DI water at 90 degree Celsius, the following materials were added into the reactor: 3.6 grams of RS-610A25 (P-12A) surfactant, 1.5 grams of sodium carbonate. The mixture being formed in the reactor is mixed for 1 minute and constitutes a seeding solution.

After the seeding solution is formed in the reactor, the monomer emulsion mixture in the container was added to the reactor at 17.4 gm/minute by using the Fluid Meter Incorporated pump. After approximately 60 minutes, or until half of the monomer emulsion mixture was added into the reactor, 15 grams of methacrylo ethylethylene urea was added.

Thereafter, the remaining monomer emulsion mixture is added into the reactor. Throughout the addition process, which lasts approximately 120 minutes, the reactor temperature was maintained at between 87 to 89 degrees Celsius. The reactor agitation rate was set at to 300 RPM.

After the monomer emulsion mixture was fed into the reactor, let the mixture set for two hours. Then, 6.7 grams of LiOH were added slowly into the reactor until the pH reaches between 7.5 to 8.5. Optionally, small amounts of biocides and defoamers were added into the reactor.

Thereafter, the cooling process of the reactor begins. Once the reactor has cooled to 30 degrees Celsius, the contents of the reactor was discharged and filtered through a 150 micron (#100 Mesh) sieve and a 45 micron (#325 Mesh) sieve. The resulting emulsion has the following properties: 50.5% solids, pH at 7.8, and particle size of 135nm.

After the emulsion polymer was prepared, it was incorporated into a coating composition formulation by mixing with the materials listed in Table 1(b).

Polymer dispersion 2 to be used in Inventive Coating Composition 2

326 grams of deionized (DI) water was charged into a glass container. Thereafter, 104.4 grams of RS-610A25 (P-12A) surfactant, 542.2 grams of styrene, 911.3 grams of EA, 5 grams of SSS, 30.5 grams of MAA, and 3.8 grams of ALMA, were added into the glass container at room temperature, to form a monomer emulsion mixture.

In a five liter reactor equipped with a mechanical stirrer, thermocouple, condenser, and stainless steel feed ports, 680 grams of DI water was added and heated to 90 degree Celsius in a nitrogen atmosphere. With the DI water at 90 degree Celsius, the following materials were added into the reactor: 3.6 grams of RS-610A25 (P-12A) surfactant, 1.5 grams of sodium carbonate. The mixture being formed in the reactor is mixed for 1 minute and constitutes a seeding solution.

After the seeding solution is formed in the reactor, the monomer emulsion mixture in the container was added to the reactor at 17.4 gm/minute by using the Fluid Meter Incorporated pump. After approximately 60 minutes, or until half of the monomer emulsion mixture was added into the reactor, 15 grams of methacrylo ethylethylene urea was added.

Thereafter, the remaining monomer emulsion mixture is added into the reactor. Throughout the addition process, which lasts approximately 120 minutes, the reactor temperature was maintained at between 87 to 89 degrees Celsius. The reactor agitation rate was set at to 300 RPM.

After the monomer emulsion mixture was fed into the reactor, let the mixture set for two hours. Then, 6.7 grams of LiOH were added slowly into the reactor until the pH reaches between 7.5 to 8.5. Optionally, small amounts of biocides and defoamers were added into the reactor.

Thereafter, the cooling process of the reactor begins. Once the reactor has cooled to 30 degrees Celsius, the contents of the reactor was discharged and filtered through a 150 micron (#100 Mesh) sieve and a 45 micron (#325 Mesh) sieve. The resulting emulsion has the following properties: 50.5% solids, pH at 7.8, and particle size of 135nm.

After the emulsion polymer was prepared, it was incorporated into a coating composition formulation by mixing with the materials listed in Table 1(b).

Polymer dispersion 3 to be used in Comparative Coating Composition 1

An emulsion polymer prepared using steps substantially similar to those described in Polymer dispersion 1 above, except that instead of adding LiOH to neutralize the polymerized monomers, 6.55 gm of sodium oxide (NaOH) was used.

Polymer dispersion 4 to be used in Comparative Coating Composition 2

An emulsion polymer prepared using steps substantially similar to those described in Polymer dispersion 2 above, except that instead of adding LiOH to neutralize the polymerized monomers, 6.55 gm of sodium oxide (NaOH) was used.

Coating Compositions

Coating compositions containing Polymer Dispersions 1-4 was prepared using the ingredients listed in Table 1(b). Grind materials were mixed using a high speed Cowles disperser, and letdown materials were added using a conventional lab mixer. Appropriate adjustment of weights of ACRYSOL™ TT-935 rheology modifier and AMP-95 base in letdown process was done such that the resulting coating had a KU viscosity of 90 to 95, and a pH of 8.5 to 9.0. The PVC value for each Inventive Coating Compositions 1 and 2, and Comparative Coating Compositions 1 and 2, is 50%. The volume solids value for each Inventive Coating Compositions 1 and 2, and Comparative Coating Compositions 1 and 2, is 44%.

**Results**

Table 4 below compares the evaluation results for the analyses that have been performed on Inventive Coating Compositions 1 and 2 (compositions of the present invention) and Comparative Coating Compositions 3 and 4.

*Table 4: Test Results*

| | Inventive Coating Composition 1 | Inventive Coating Composition 2 | Comparative Coating Composition 1 | Comparative Coating Composition 2 |
|---|---|---|---|---|
| Emulsion copolymer weight distribution (based on total dry weight of binder) | 50 EA/39 ST/7 EHA/ 2 MAA | 60 EA/36 ST/2 MAA | 50 EA/39 ST/7 EHA/ 2 MAA | 60 EA/36 ST/2 MAA |
| Neutralizer used | LiOH | LiOH | NaOH | NaOH |
| Wt.% of wax included in the coating composition | 5% | 5% | 5% | 5% |
| Beading Effect Score | 5 | 4 | 2 | 2 |
| Stain Score | 67 | 63 | 63 | 63 |

The test results in Table 4 show that all of the inventive and comparative samples contain the same amount of paraffin wax. Table 4 further shows that Inventive Coating Compositions 1 and 2, which contain binders that comprise ethyl acrylate and ethylhexyl acrylate, and used LiOH as neutralizing agent, show significantly better beading effects than Comparative Coating Compositions 1 and 2, which contain the same binders but used NaOH as neutralizing agent. Therefore, the test results show that when LiOH is used as neutralizing agent in combination with a binder made with alkyl acrylic monomers, the resulting coating composition would have improved stain repellency.

**Claims**

1.  A coating composition comprising, by dry weight based on total dry weight of the coating composition,

    i) from 20 wt.% to 45 wt.% of an emulsion copolymer being a copolymerization product of a monomer mixture comprising, based on the total dry weight of the emulsion copolymer, from 30 wt.% to 80 wt.% of ethyl acrylate; from 20 wt.% to 70 wt.% of styrene; and from 1 wt.% to 4 wt.% of an ethylenically unsaturated carboxylic acid monomer or a salt thereof;
    ii) from 0.5% to 5% of a paraffin wax;
    iii) from 30% to 55% of a pigment; and
    iv) from 0.003% to 0.5% of lithium hydroxide.

2.  The coating composition of claim 1, wherein the monomer mixture further comprises, based on the total dry weight of the emulsion copolymer, up to 20 wt.% of 2-ethylhexyl acrylate.

3.  The coating composition of claim 1, wherein the monomer mixture further comprises, based on the total dry weight of the emulsion polymer, up to 1 wt.% of an ethylenically unsaturated sulfur containing acid functional monomer.

4.  The coating composition of claim 3, wherein the ethylenically unsaturated sulfur containing acid functional monomer is sodium styrene sulfonate.

**Patentansprüche**

1.  Eine Beschichtungszusammensetzung, die nach Trockengewicht, bezogen auf das Gesamttrockengewicht der Beschichtungszusammensetzung, Folgendes beinhaltet:

    i) zu 20 Gew.-% bis 45 Gew.-% ein Emulsionscopolymer, das ein Copolymerisationsprodukt eines Monomergemisches ist, das, bezogen auf das Gesamttrockengewicht des Emulsionscopolymers, Folgendes beinhaltet: zu 30 Gew.-% bis 80 Gew.-% Ethylacrylat; zu 20 Gew.-% bis 70 Gew.-% Styrol; und zu 1 Gew.-% bis 4 Gew.-% ein ethylenisch ungesättigtes Carbonsäuremonomer oder ein Salz davon;
    ii) zu 0,5 % bis 5 % ein Paraffinwachs;
    iii) zu 30 % bis 55 % ein Pigment; und

iv) zu 0,003 % bis 0,5 % Lithiumhydroxid.

**2.** Beschichtungszusammensetzung gemäß Anspruch 1, wobei das Monomergemisch ferner, bezogen auf das Gesamttrockengewicht des Emulsionscopolymers, bis zu 20 Gew.-% 2-Ethylhexylacrylat beinhaltet.

**3.** Beschichtungszusammensetzung gemäß Anspruch 1, wobei das Monomergemisch ferner, bezogen auf das Gesamttrockengewicht des Emulsionspolymers, bis zu 1 Gew.-% ein ethylenisch ungesättigtes schwefelhaltiges säurefunktionelles Monomer beinhaltet.

**4.** Beschichtungszusammensetzung gemäß Anspruch 3, wobei das ethylenisch ungesättigte schwefelhaltige säurefunktionelle Monomer Natriumstyrolsulfonat ist.

**Revendications**

**1.** Une composition de revêtement comprenant, en poids sec rapporté au poids sec total de la composition de revêtement,

    i) de 20 % en poids à 45 % en poids d'un copolymère en émulsion étant un produit de copolymérisation d'un mélange de monomères comprenant, rapporté au poids sec total du copolymère en émulsion, de 30 % en poids à 80 % en poids d'acrylate d'éthyle ; de 20 % en poids à 70 % en poids de styrène ; et de 1 % en poids à 4 % en poids d'un monomère d'acide carboxylique éthyléniquement insaturé ou d'un sel de celui-ci ;
    ii) de 0,5 % à 5 % d'une cire de paraffine ;
    iii) de 30 % à 55 % d'un pigment ; et
    iv) de 0,003 % à 0,5 % d'hydroxyde de lithium.

**2.** La composition de revêtement de la revendication 1, dans laquelle le mélange de monomères comprend en sus, rapporté au poids sec total du copolymère en émulsion, jusqu'à 20 % en poids d'acrylate de 2-éthylhexyle.

**3.** La composition de revêtement de la revendication 1, dans laquelle le mélange de monomères comprend en sus, rapporté au poids sec total du polymère en émulsion, jusqu'à 1 % en poids d'un monomère fonctionnel acide éthyléniquement insaturé contenant du soufre.

**4.** La composition de revêtement de la revendication 3, dans laquelle le monomère fonctionnel acide éthyléniquement insaturé contenant du soufre est le styrène sulfonate de sodium.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9808894 A1
- EP 2077301 A1
- US 4423031 A
- US 3494878 A
- GB 1197925 A
- CN 104017146
- US 4139514 A
- JP 4507043 B